# EUROPÄISCHE PATENTSCHRIFT

(11) **EP 2 334 523 B1**
(45) Veröffentlichungstag und Bekanntmachung des Hinweises auf die Patenterteilung: **09.11.2016**
(21) Anmeldenummer: 09740062.6
(22) Anmeldetag: 14.10.2009
(51) Int. Cl.: B60S 1/48, B60S 1/52, F16K 17/00

(54) **WASCHANLAGE FÜR FAHRZEUGSCHEIBEN SOWIE RÜCKSCHLAG- UND ENTLÜFTUNGSVENTIL FÜR EINE SOLCHE ANLAGE**
WASHING SYSTEM FOR VEHICLE WINDOWS AND CHECK AND BLEED VALVE FOR SUCH A SYSTEM
SYSTÈME DE LAVAGE POUR VITRES DE VÉHICULES ET CLAPET DE NON-RETOUR ET DE PURGE POUR UN TEL SYSTÈME

(30) Priorität: 14.10.2008 DE 102008051586
(43) Veröffentlichungstag der Anmeldung: 22.06.2011
(60) Teilanmeldung: 13164871.9
(73) Patentinhaber: Valeo Systèmes d'Essuyage, 78321 La Verrière (FR)
(72) Erfinder: EGNER-WALTER, Bruno, 74076 Heilbronn (DE); SCHÄUBLE, Michael, 71665 Vaihingen/Enz (DE)
(74) Vertreter: Vötsch, Reiner
(86) Internationale Anmeldenummer: PCT/EP2009/007370
(87) Internationale Veröffentlichungsnummer: WO 2010/043384

(56) Entgegenhaltungen:
- EP-A- 0 974 503
- DE-A1- 19 745 534
- FR-A- 2 124 667
- FR-A- 2 783 225
- US-A- 4 212 425

## Beschreibung

Die Erfindung bezieht sich auf eine Waschanlage für Fahrzeuge gemäß dem Oberbegriff des Patentanspruchs 1.

Waschanlagen für Fahrzeugscheiben, d.h. zum Ausbringen einer Reinigungs- und Waschflüssigkeit (in der Regel Wasser, gegebenenfalls mit Reinigungs- und/oder Frostschutzzusätzen) sind in verschiedenen Ausführungen bekannt und bestehen grundsätzlich aus einer von einem Tank für die Reinigungs- und Waschflüssigkeit und von wenigstens einer Pumpe gebildeten Quelle, die über wenigstens eine Flüssigkeitsverbindung die Reinigungs- und Waschflüssigkeit an wenigstens einer Düsenöffnung zum Ausbringen auf die Fahrzeugscheibe bereitstellt. Die wenigstens eine Düsenöffnung ist beispielsweise die Düsenöffnung wenigstens einer am Fahrzeug bzw. an der Fahrzeugkarosserie angeordnet Waschdüse oder aber eine Düsenöffnung, die vorzugsweise zusammen mit weiteren Düsenöffnungen an einem Wischblatt einer Scheibenwischanlage vorgesehen ist.

Bekannt ist bei derartigen Waschanlagen, in der beispielsweise von wenigstens einer Schlauchleitung gebildeten Flüssigkeitsverbindung wenigstens ein Rückschlagventil vorzusehen, mit welchem verhindert wird, dass die Flüssigkeitsverbindung bei nicht aktivierter Waschanlage leerläuft, sodass bei jedem Aktivieren der Waschanlage, beispielsweise manuell oder aber über eine Intervallschaltung, ohne eine wesentliche Verzögerung die Reinigungs- und Waschflüssigkeit sofort auf die Fahrzeugscheibe ausgebracht wird. Nachteilig hierbei ist, dass bei ungenügendem Frostschutz in der Reinigungs- und Waschflüssigkeit diese in der kalten Jahreszeit in der Flüssigkeitsverbindung einfrieren kann und dort, wo die Flüssigkeitsverbindung nicht beheizt oder beheizbar ist, z.B. nicht durch einen beheizten oder beheizbaren Raum des Fahrzeugs verläuft, sich ein Auftauen der eingefrorenen Flüssigkeitsverbindung äußerst schwierig gestaltet.

Bekannt ist (DE 197 45 534 A1) eine die Waschdüse zum Ausbringen der Reinigungs- und Waschflüssigkeit mit einem Ventil auszubilden, welches die Funktion eines kombinierten Rückschlag- und Entlüftungsventils aufweist, und zwar in der Form, dass dieses Ventil im Ausgangszustand einen in dem Gehäuse der Waschdüse ausgebildeten Flüssigkeitskanals zu einer an die Waschdüse führenden fahrzeugseitigen Flüssigkeitsleitung sperrt, gleichzeitig den waschdüsenseitigen Flüssigkeitskanal zumindest in einem Teilbereich zur Umgebung hin entlüftet und umgekehrt bei der Waschdüse unter Druck zugeführter Reinigungs- und Waschflüssigkeit die Verbindung zur fahrzeugseitigen Flüssigkeitsleitung öffnet und die Verbindung des waschdüsenseitigen Kanals zur Umgebung sperrt, und zwar unter Verwendung eines einzigen, in der Waschdüse beweglich angeordneten Ventilelementes. Auch bei Verwendung dieser bekannten Waschdüse können ein Einfrieren der fahrzeugseitigen Flüssigkeitsleitung sowie insbesondere auch ein Einfrieren von Resten der Reinigungs- und Waschflüssigkeit in der Waschdüse und dadurch bedingte Funktionsstörungen nicht verhindert werden.

Aus der EP 0 974 503 A2 ist eine Scheibenreinigungsanlage nach dem Oberbegriff des Anspruchs 1 bekannt, die ein Rückschlagventil aufweist, so dass ein Einfrieren der Waschflüssigkeit in der Waschdüse weitgehend verhindert werden kann. Dazu wird bei dem aus der genannten Schrift bekannten Rückschlagventil die Entlüftung über die Sprühdüsen realisiert. Separate, von den Sprühdüsen getrennte Entlüftungsöffnungen mit damit zusammenwirkenden Ventilelementen sind nicht offenbart.

Aus der FR 2 783 225 A1 ist darüber hinaus eine Waschanlage nach dem Oberbegriff des Anspruchs 1 bekannt, bei der eine Waschflüssigkeitsdüse zum Aufbringen einer Waschflüssigkeit auf eine Fahrzeugscheibe mit einer mit einem Waschflüssigkeitsbehälter verbindbaren Leitung gekoppelt ist. Innerhalb der Waschflüssigkeitsdüse ist ein Heizdraht angeordnet, und darüber hinaus ist innerhalb der Waschflüssigkeitsdüse ein Rückschlagventil vorgesehen, das den Innenraum der Waschflüssigkeitsdüse in zwei Bereiche unterteilt. Auch hier findet eine Entlüftungsfunktion über die Sprühdüsen statt, eine von einem Ventilelement verschließbare, separate Entlüftungsöffnung ist nicht vorgesehen.

Aus der FR 2 124 667 A1 ist eine Waschanlage bekannt, die ein Rückschlagventil und ein von dem Rückschlagventil getrennt angeordnetes Rückschlag- und Entlüftungsventil aufweist. Das Rückschlag- und Entlüftungsventil weist einen ersten Anschluss auf, der über ein T-Stück sowohl mit einer Waschflüssigkeitspumpe als auch mit den Waschdüsen verbunden ist. Ein zweiter Anschluss am Rückschlag- und Entlüftungsventil dient der Entlüftung. Es ist zwar erwähnt, dass beide Ventile in einem gemeinsamen Gehäuse angeordnet werden können. Eine Entlüftung einer Flüssigkeitsleitung, die sich an das Rückschlagventil anschließt, ist jedoch nicht offenbart.

Aus der DE 197 45 534 A1 ist es darüber hinaus bei einer Scheibenwaschdüse mit einem Abflusskanal bekannt, ein Ventilelement innerhalb der Scheibenwaschdüse derart anzuordnen, dass dieses entweder eine Verbindung zwischen einem Auslasskanal und einem Einlasskanal für das Aufsprühen von Waschflüssigkeit auf die Fahrzeugscheibe freigibt, oder aber bei Sperrung der genannten Verbindung einen Abflusskanal freigibt, um zwischen dem Auslasskanal und dem Abflusskanal in der Scheibenwaschdüse befindliche Flüssigkeit entleeren zu können. Das Ventilelement ist bei der bekannten Scheibenwaschdüse durch ein starres Element gebildet, das längsverschiebbar in der Scheibenwaschdüse angeordnet ist.

Aufgabe der Erfindung ist es, eine Waschanlage für Fahrzeugscheiben nach dem Oberbegriff des Anspruchs 1 derart weiterzubilden, dass eine konstruktiv besonders einfache und wenige Bauteile aufweisende Waschanlage ermöglicht wird. Diese Aufgabe wird bei einer Waschanlage mit den Merkmalen des Anspruchs 1 gelöst.

Bei der erfindungsgemäßen Waschanlage ist die wenigstens eine Flüssigkeitsverbindung zwischen der Quelle, die Reinigungs- und Waschflüssigkeit unter Druck zur Verfügung stellt, und der wenigstens einen Düse in mindestens zwei Abschnitte unterteilt, die über wenigstens ein kombiniertes Rückschlag- und Entlüftungsventil miteinander verbunden sind. Die Anordnung ist dabei so getroffen, dass der dieses Rückschlag- und Entlüftungsventil mit der Quelle für die Reinigungs- und Waschflüssigkeit verbindende Abschnitt der Flüssigkeitsverbindung sowie auch das Rückschlag- und Entlüftungsventil in einem beheizten oder beheizbaren Raum, beispielsweise im Motorraum oder in einem anderen, z.B. durch die Abwärme des Fahrzeugmotors, beheizten Raum untergebracht und/oder aktiv, beispielsweise elektrisch beheizbar sind.

Das jeweilige Rückschlag- und Entlüftungsventil ist so ausgebildet, dass es bei nicht aktivierter Waschanlage den das Rückschlag- und Entlüftungsventil mit der wenigstens einen Düsenöffnung verbindenden Abschnitt der Flüssigkeitsverbindung, der (Abschnitt) nicht in einem beheizten oder beheizbaren Raum des Fahrzeugs verläuft und auch nicht beheizbar ausgebildet ist, entlüftet, sodass dieser Abschnitt der Flüssigkeitsverbindung leer laufen kann und damit die Gefahr eines Einfrierens dieses Abschnittes nicht besteht, während bei aktivierter Waschanlage über das Rückschlag und Entlüftungsventil eine Flüssigkeitsverbindung hergestellt ist.

Da bei der erfindungsgemäßen Waschanlage zumindest ein Teil der gesamten Länge der Flüssigkeitsverbindung auch bei nicht aktivierter Waschanlage mit der Reinigungs- und Waschflüssigkeit gefüllt ist, ist beim Aktivieren der Waschanlage ein nahezu verzögerungsfreies Ausbringen der Reinigungs- und Waschflüssigkeit auf die jeweilige Fahrzeugscheibe gewährleistet, und zwar bei gleichzeitiger Vermeidung von ernsthaften Betriebsstörungen durch Einfrieren. Das Rückschlag- und Entlüftungsventil ist vorzugsweise von einem kombinierten Rückschlag- und Entlüftungsventil gebildet, welches in besonders einfacher Weise in der jeweiligen Flüssigkeitsverbindung für die Reinigungs- und Waschflüssigkeit montiert werden kann.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1 u. 2: jeweils in sehr schematischer Darstellung eine Scheibenwisch- und Waschanlage für eine Frontscheibe eines Kraftfahrzeugs, insbesondere eines PKWs bei zwei unterschiedlichen Ausführungsformen;
- Fig. 3 u. 4: in vereinfachter Schnittdarstellung ein kombiniertes Rückschlag- und Entlüftungsventil zur Verwendung bei der Scheibenwisch- und Waschanlage der Figuren 1 und 2.

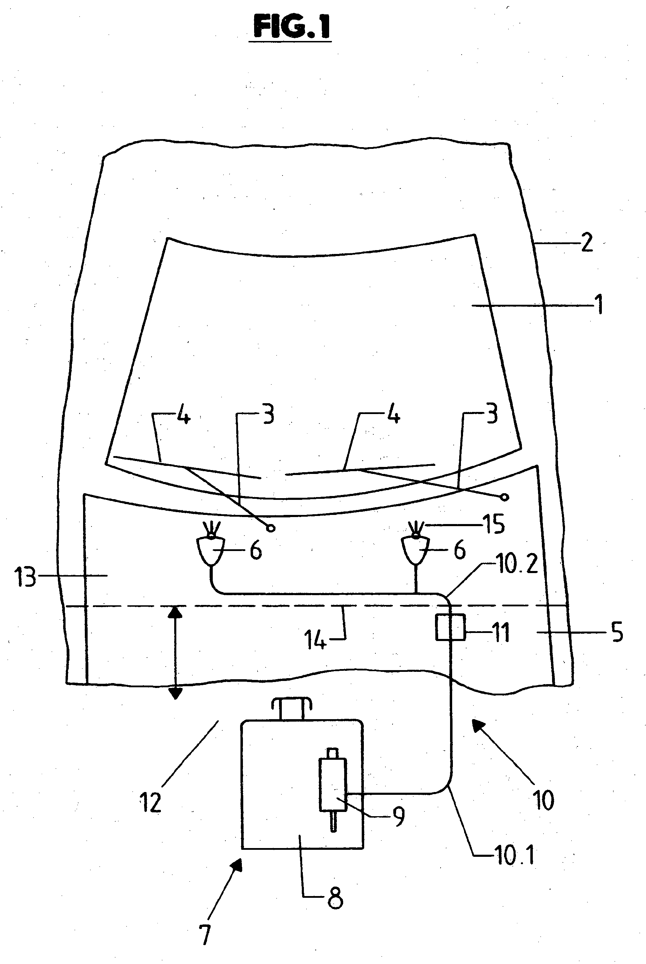

In der Figur 1 ist 1 die Frontscheibe eines Kraftfahrzeugs 2, nämlich eines PKWs. An der Frontscheibe ist u. a. eine Scheibenwischanlage vorgesehen, von der in der Figur 1 die beiden Wischarme 3 und die an diesen Wischarmen befestigten Wischblätter 4 gezeigt sind.

Dargestellt ist weiterhin eine Waschanlage zum Ausbringen einer Reinigungs- und Waschflüssigkeit (z.B. Wasser gegebenenfalls mit Reinigungs- und/oder Frostschutzzusätzen) auf die Fahrzeugscheibe 1. Die Waschanlage besteht bei der dargestellten Ausführungsform aus zwei auf der Motorhaube 5 des Fahrzeugs 2 angeordneten und auf die Fahrzeugscheibe 1 gerichteten Waschdüsen 6, die über eine Fluid- oder Flüssigkeitsverbindung zum Zuführen der Reinigungs- und Waschflüssigkeit an die Waschdüsen 6 bzw. und zum Ausbringen der Reinigungs- und Waschflüssigkeit als Flüssigkeitsstrahlen auf die Fahrzeugscheibe 1 mit der Quelle 7 verbunden sind. Diese besteht im Wesentlichen aus einem Behälter 8 mit der Reinigungs- und Waschflüssigkeit sowie aus wenigstens einer elektrisch betriebenen Pumpe 9.

Die Fluidverbindung ist von einer Fluidleitung, beispielsweise Schlauchleitung 10, gebildet, die im Wesentlichen den an den Ausgang der Pumpe 9 angeschlossenen Leitungsabschnitt 10.1 sowie den verzweigten, an die Waschdüsen 6 angeschlossenen Leitungsabschnitt 10.2 umfasst. Zwischen beiden Leitungsabschnitten 10.1 und 10.2 ist ein diese Leitungsabschnitte verbindendes kombiniertes Rückschlag- und Entlüftungsventil 11 angeordnet. Der Leitungsabschnitt 10.1 und das Rückschlag- und Entlüftungsventil 11 sind in einem zumindest während des Betriebs des Fahrzeugs 2 beheizten oder beheizbaren Bereich dieses Fahrzeugs untergebracht, und zwar bei der in der Figur 1 dargestellten Ausführungsform in dem von der Abwärme des Fahrzeugmotors beheizten Motorraum 12 unterhalb der Motorhaube 5. Der verzweigte Leitungsabschnitt 10.2 verläuft außerhalb des beheizten oder beheizbaren Fahrzeugraumes, d.h. bei der dargestellten Ausführungsform außerhalb des Motorraumes 12 in einem Fahrzeugraum oder -bereich 13, der insbesondere auch bei geschlossener Motorhaube 5 durch eine Trennwand 14 von dem Motorraum 12 getrennt ist.

Das kombinierte Rückschlag- und Entlüftungsventil 11 wird durch den von der Pumpe 9 erzeugten Druck der Reinigungs- und Waschflüssigkeit derart, dass bei eingeschalteter Pumpe 9 die Reinigungs- und Waschflüssigkeit über das Rückschlag- und Entlüftungsventil mit dem erforderlichen Druck den Waschdüsen 6 zugeleitet wird, aus denen die Reinigungs- und Waschflüssigkeit dann als Spritzstrahlen auf die Fahrzeugscheibe 1 austritt, und zwar ohne dass Reinigungs- und Waschflüssigkeit an dem Rückschlag- und Entlüftungsventil 11 verloren geht, d.h. dort austritt. Bei reduziertem oder fehlendem Flüssigkeitsdruck am Ausgang der Pumpe 9, d.h. bei abgeschalteter Pumpe 9 oder nicht aktivierter Waschanlage öffnet das Rückschlag- und Entlüftungsventil 11 wenigstens eine Entlüftungsöffnung, über die ein Entleeren des Leitungsabschnittes 10.2 sowie auch der Kanäle in den Waschdüsen 6 erfolgt, während der Leitungsabschnitt 10.1 an dem Rückschlag- und Entlüftungsventil 11 geschlossen wird, um ein Leerlaufen des Leitungsabschnittes 10.1 zu verhindern. Hiermit wird erreicht, dass bei jedem erneuten Aktivieren der Pumpe 9 der Leitungsabschnitt 10.1 bereits mit der Reinigungs- und Waschflüssigkeit gefüllt ist und diese dann nach dem Füllen des verzweigten Leitungsabschnittes 10.2, dessen Gesamtlänge und Volumen klein gehalten werden können, mit nur geringer Verzögerung an den Waschdüsen 6 austritt. Durch das Leerlaufen des Leitungsabschnittes 10.2 werden in der kalten Jahreszeit ein Einfrieren der Reinigungs- und Waschflüssigkeit in den Waschdüsen 6 sowie in dem Leitungsabschnitt 10.2 und dadurch bedingte Betriebsstörungen der Waschanlage bei fehlendem Frostschutzmittel oder bei ungenügender Menge an Frostschutzmittel vermieden. Die Gefahr von nachhaltigen Funktionsstörungen der Waschanlage durch Einfrieren der Reinigungs- und Waschflüssigkeit im Leitungsabschnitt 10.1 besteht nicht, da durch die Motorwärme ein schnelles Auftauen von eventuell gefrorener Reinigungs- und Waschflüssigkeit erfolgt. Gleiches gilt selbstverständlich auch, wenn der zwischen der Quelle 7 und dem kombinierten Rückschlag- und Entlüftungsventil 11 verlaufende Leitungsabschnitt anderweitig, beispielsweise elektrisch beheizt ist.

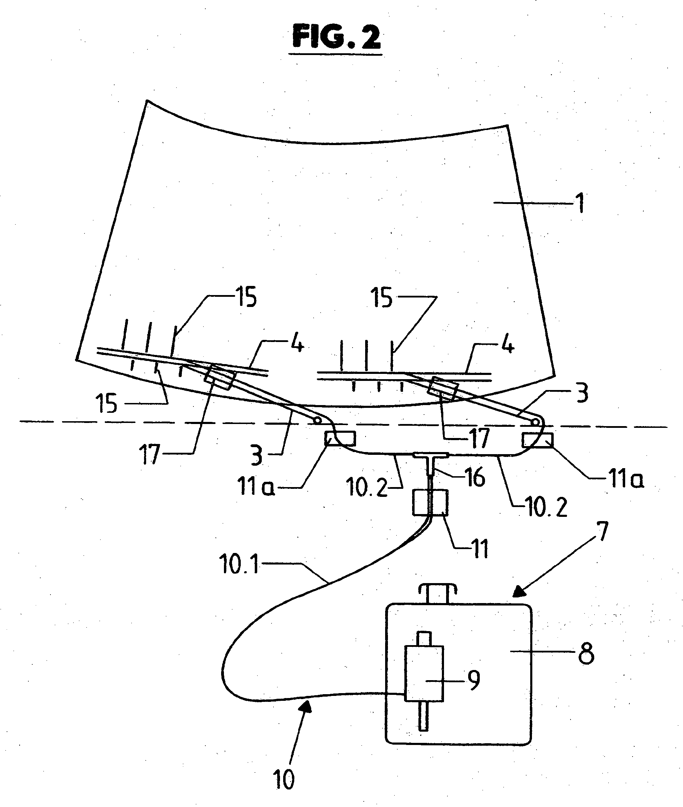

Die Figur 2 zeigt eine Scheibenwisch- und Waschanlage für die Fahrzeugscheibe 1 des Fahrzeugs 2, die sich von der Scheibenwisch- und Waschanlage der Figur 1 im Wesentlichen nur dadurch unterscheidet, dass zum Ausbringen der Reinigungs- und Waschflüssigkeit nicht Waschdüsen 6 an der Fahrzeugkarosserie bzw. an der Motorhaube 5 vorgesehen sind, sondern die Wischblätter 4 als so genannte Nass-Wischblätter ausgeführt sind, also als Wischblätter, die jeweils an wenigstens einer Wischblattlängsseite zumindest eine, vorzugsweise aber mehrere Düsenöffnungen aufweisen, und zwar zum Ausbringen der Reinigungs- und Waschflüssigkeit auf die Fahrzeugscheibe 1 in Form von Spritzstrahlen, wie dies in der Figur 2 mit 15 schematisch dargestellt ist. Die Pumpe 9 ist wiederum über den in einem beheizten oder beheizbaren Bereich des Fahrzeugs verlaufenden Leitungsabschnitt 10.1 mit dem ebenfalls in dem beheizten oder beheizbaren Bereich des Fahrzeugs untergebrachten kombinierten Rückschlag- und Entlüftungsventil 11 verbunden. Der verzweigte Leitungsabschnitt 10.2 bzw. dessen über ein T-Stück 16 mit dem Ausgang des Rückschlag- und Entlüftungsventils 11 verbundene Teilabschnitte führen bis an jeweils ein Wischblatt 4 und sind beispielsweise über jeweils einen Wischblattadapter 17 mit den am Wischblatt 4 vorgesehenen Düsen oder Düsenöffnungen zum Ausbringen der Spritzstrahlen 15 verbunden. Die Wischblattadapter 17 dienen dabei für die lösbare oder austauschbare mechanische Verbindung der Wischblätter 4 mit dem jeweiligen Wischarm 3 sowie zugleich auch für die Fluidverbindung zwischen dem Wischblatt 4 und dem zugehörigen Teilabschnitt des Leitungsabschnittes 10.2. Die Funktionsweise des Rückschlag- und Entlüftungsventils 11 und die mit diesem Ventil erzielten Vorteile sind dieselben, wie vorstehend im Zusammenhang mit der Figur 1 beschrieben.

Wie in der Figur 2 mit 11a angedeutet, besteht auch die Möglichkeit, anstelle des in Strömungsrichtung der Reinigungs- und Waschflüssigkeit vor dem T-Stück 16 angeordneten Rückschlag- und Entlüftungsventils 11 in Strömungsrichtung nach dem T-Stück 16 jeweils ein kombiniertes Rückschlag- und Entlüftungsventil 11a vorzusehen, und zwar dann, wenn die Möglichkeit besteht, diese Rückschlag- und Entlüftungsventile 11a sowie den gesamten, in Strömungsrichtung der Reinigungs- und Waschflüssigkeit vorausgehenden Leitungsabschnitt der Fluidleitung 10 in einem beheizbaren oder beheizten Raum des Fahrzeugs unterzubringen und/oder wenn das jeweilige Rückschlag- und Entlüftungsventil 11a und der diesem Ventil in Strömungsrichtung der Reinigungs- und Waschflüssigkeit vorausgehende Teil der Flüssigkeitsverbindung 10 beheizbar, beispielsweise elektrisch beheizbar ausgebildet sind, z.B. dadurch, dass in der Fluidleitung oder Schlauchleitung wenigstens ein als elektrisches Heizelemente dienender Heizdraht vorgesehen ist, der bis in die Rückschlag- und Entlüftungsventile 11a bzw. deren Ventilgehäuse reicht.

Grundsätzlich besteht auch die Möglichkeit, die kombinierten Rückschlag- und Entlüftungsventile am jeweiligen Wischblatt 4 oder am freien Ende des jeweiligen Wischarmes 3, also im Bereich der Verbindung zwischen dem Wischarm 3 und dem Wischblatt 4 vorzusehen, beispielsweise auch in dem dortigen Wischblattadapter 17, und zwar wieder dann, wenn die Ventile und die Flüssigkeitsleitung 10 zumindest in den nicht in einem beheizten oder beheizbaren Fahrzeugraum verlaufenden Teil beheizbar, beispielsweise elektrisch beheizbar ausgeführt sind.

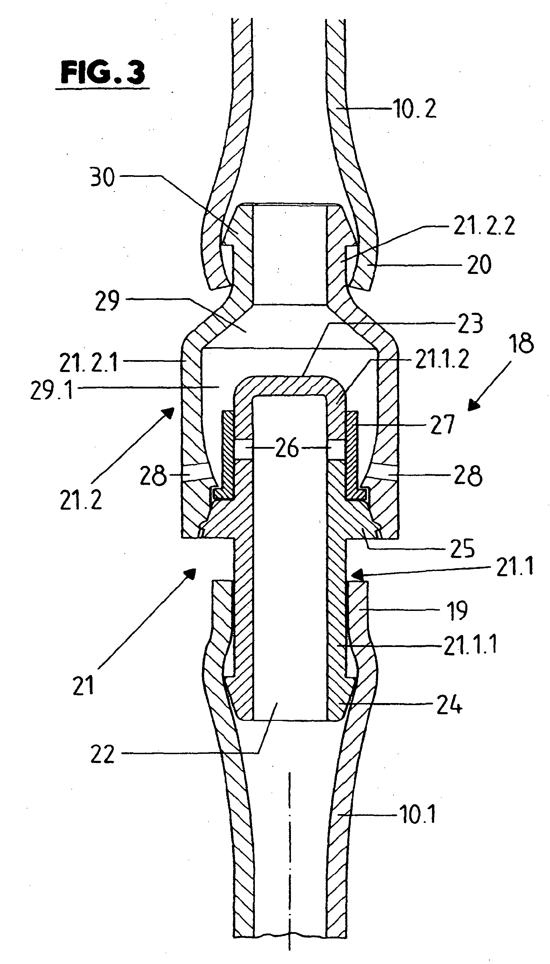

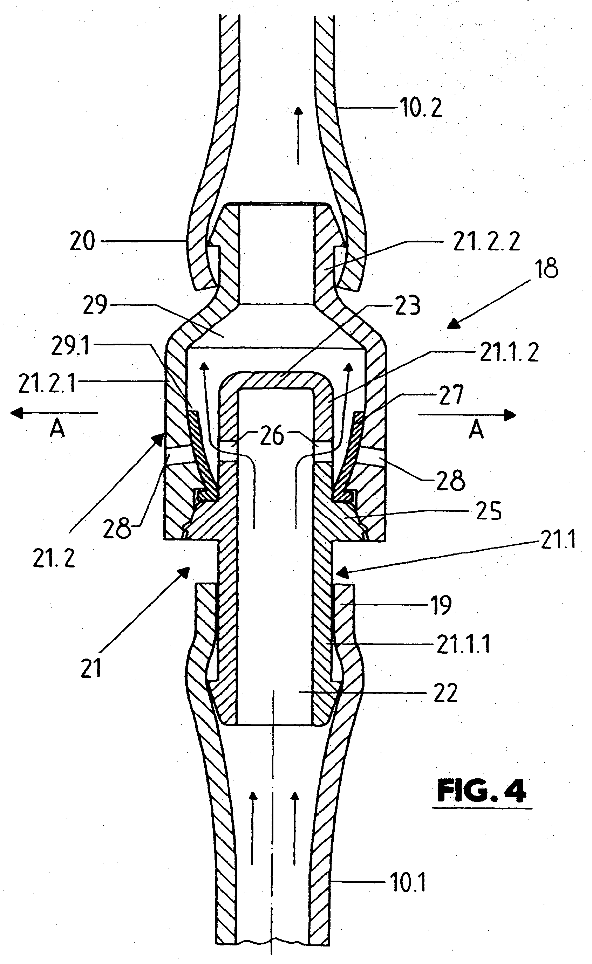

Die Figuren 3 und 4 zeigen in vereinfachter Darstellung ein Ventil 18, welches als kombiniertes Rückschlag- und Entlüftungsventil 11 bzw. 11a verwendet und in besonders einfacher Weise zwischen zwei Enden 19 und 20 einer Schlauchleitung, beispielsweise der als Schlauchleitung ausgebildeten Flüssigkeitsleitung 10 montiert werden kann.

Das Ventil 18 besteht bei der dargestellten Ausführungsform im Wesentlichen aus einem zweiteiligen Ventilgehäuse 21 mit den beiden Gehäuseteilen 21.1 und 21.2, die jeweils Formteile aus Kunststoff sind.

Das Gehäuseteil 21.1 ist hülsenartig ausgebildet, und zwar mit einer von einer Hülsenöffnung 22 gebildeten ersten Ventilkammer 22, die an einem Ende, d.h. bei der für die Figuren 3 und 4 gewählten Darstellung am unteren Ende des Gehäuseteils 21.1 offen und am anderen Ende durch einen Wandabschnitt 23 verschlossen ist. An der offenen Seite der Ventilkammer 22 bildet das Gehäuseteil 21.1 bzw. dessen Gehäuseabschnitt 21.1.1 einen Anschlussstutzen zum Anschließen an das Ende 19 der Schlauchleitung 10 und das hülsenartige Gehäuseteil 21.1 ist dort mit einer widerhakenartigen Außenkontur 24 versehen, mit der das Gehäuseteil 21.1 durch Einschieben in dem Ende 19 widerhakenartig verankert ist. Zwischen seinen beiden Enden ist das Gehäuseteil 21.1 mit einem flanschartigen Abschnitt 25 mit vergrößertem Außendurchmesser versehen. Zwischen dem Abschnitt 25 und dem geschlossenen Ende 23 sind in der Wand des Gehäuseteils 21.1 bzw. des Gehäuseabschnitts 21.1.2 mehrere Ventilöffnungen 26 vorgesehen, und zwar in gleichmäßigen Winkelabständen um die Achse des rotationssymmetrischen Gehäuseteils 21.1 bzw. des rotationssymmetrischen Gehäuseteilabschnitts 21.1.2 verteilt. Im Bereich dieser Ventilöffnungen 26 ist das Gehäuseteil 21.1 von einem hülsenartigen oder schlauchartigen Ventilelement 27 umschlossen, welches aus einem gummielastischen Material, beispielsweise aus Gummi oder aus elastomerem Kunststoff, besteht und die Ventilöffnung 26 im drucklosen Zustand an der Außenseite des Gehäuseteils 21.1 verschließt.

Das ebenfalls um seine Längsachse rotationssymmetrisch ausgeführte Gehäuseteil 21.2 besteht im Wesentlichen aus einem Gehäuseabschnitt 21.2.1 mit vergrößertem Außen- und Innenquerschnitt, der den Gehäuseabschnitt 21.1.2 des Gehäuseteils 21.1 glockenartig übergreift und an seinem offenen Ende beispielsweise durch Verkleben und/oder Verschweißen und/oder Verschrauben und/oder auf andere geeignete Weise dicht mit dem Flanschabschnitt 25 verbunden ist. Zwischen dem Gehäuseabschnitt 21.2.1 und dem Flanschabschnitt 25 ist auch das Ventilelement 27 im Bereich seines unteren, dem verschlossenen Ende 23 abgewandten Rand befestigt, z.B. eingespannt. In dem Teilabschnitt 21.2.1 sind um die Achse dieses Gehäuseabschnitts verteilt mehrere Entlüftungsöffnungen 28 vorgesehen, die den von dem Gehäuseabschnitt 21.2.1 und dem Gehäuseabschnitt 21.1.2 gebildeten Ringraum 29.1, in dem sich auch das Ventilelement 27 befindet, mit der Umgebung verbinden. Der Ringraum 29.1 ist Teil einer zweiten Ventilkammer 29, die innerhalb des Gehäuseteils 21.2 gebildet ist. In diese zweite Ventilkammer reicht das Gehäuseteil 21.1 mit seinem Teilabschnitt 21.1.2 hinein.

An seinem dem Flanschbereich 25 entfernt liegenden und in den Figuren 3 und 4 oberen Ende bildet das Gehäuseteil 21.2 mit einem Teilabschnitt 21.2.2 einen rohrartigen mit der Ventilkammer 29 in Verbindung stehenden Anschlussstutzen mit äußerer widerhakenartiger Struktur 30, mit dem (Anschlussstutzen) das Ventil 18 durch Einschieben mit dem Ende 20 der Schlauchleitung 10 verbunden ist.

In dem in der Figur 3 dargestellten Zustand des Ventils 18 sind die Ventilöffnungen 26 durch das Ventilelement 27 verschlossen und damit auch die mit der Ventilkammer 22 in Verbindung stehende, das Ende 19 aufweisende Teillänge der Schlauchleitung 10, die bei in einer Waschanlage montiertem Ventil 18 der sich zwischen der Quelle 7 für die Reinigungs- und Waschflüssigkeit und dem Ventil 18 erstreckende Leitungsabschnitt ist. Über die Entlüftungsöffnungen 28 sind die zweite Ventilkammer 29 sowie der das Ende 20 aufweisende Teil der Schlauchleitung 10 entlüftet, d.h. bei in einer Waschanlage montiertem Ventil 18 der sich zwischen diesem Ventil und den Düsenöffnungen zum Ausbringen der Reinigungs- und Waschflüssigkeit erstreckende Leitungsabschnitt, sodass dieser Leitungsabschnitt bei fehlendem Flüssigkeitsdruck leer laufen kann.

Figur 4 zeigt den Zustand des Ventils 18 bei der Ventilkammer 22 unter Druck zugeführter Reinigungs- und Waschflüssigkeit. Durch die aus der Ventilkammer 22 und aus den Ventilöffnungen 26 in die Ventilkammer 29 eintretende Reinigungs- und Waschflüssigkeit wird der Ventilkörper 27 elastisch derart radial nach außen verformt (Pfeile A der Figur 4), und zwar derart, dass der Ventilkörper 27 an seinem in den Figuren 3 und 4 oberen, dem Flanschabschnitt 25 entfernt liegenden Rand einen Ringspalt öffnet, über welchen die Reinigungs- und Waschflüssigkeit aus der Ventilkammer 22 über die Ventilöffnungen 26 in die von dem Ringraum 29 gebildete zweite Ventilkammer 29 strömen kann.

Gleichzeitig kommt der Ventilkörper 27 gegen die Innenfläche des Teilabschnitts 21.2.1 zur Anlage und verschließt die Entlüftungsöffnungen 28, sodass die Reinigungs- und Waschflüssigkeit unter Druck über den Leitungsabschnitt 10.2 an die Düsenöffnungen zum Ausbringen auf die Fahrzeugscheibe gelangt.

Um das dichte Verschließen der Entlüftungsöffnungen 28 durch das Ventilelement 27 zu erreichen, ist die Innenfläche des Gehäuseteilabschnitts 21.2.1 zumindest im Bereich der Entlüftungsöffnungen 28 leicht konkav ausgebildet, und zwar angepasst an die Form, die das Ventilelement 27 annimmt, wenn es durch den Druck der Reinigungs- und Waschflüssigkeit die Ventilöffnungen 26 freigebend elastisch verformt wird. Weiterhin ist der Ringraum 29.1 so geformt, dass sich dessen Breite in Richtung zum Flanschabschnitt 25 hin keilförmig verändert.

Das Ventil 18, zeichnet sich bei hoher Betriebssicherheit durch eine sehr vereinfachte Konstruktion aus.

## Patentansprüche

1. Waschanlage für Fahrzeugscheiben, insbesondere für Fahrzeugfrontscheiben (1) mit wenigstens einer Düsenöffnung, die zum Ausbringen der Reinigungs- und Waschflüssigkeit auf die Fahrzeugscheiben über eine Flüssigkeitsverbindung mit einer die Reinigungs- und Waschflüssigkeit unter Druck bereitstellenden Quelle (7) verbindet sowie mit wenigstens einem in der Flüssigkeitsverbindung vorgesehenen Rückschlag- und Lüftungsventil (11, 11a, 18), welches bei aktivierter Waschanlage die Reinigungs- und Waschflüssigkeit an die wenigstens eine Düsenöffnung weiterleitet, bei nicht aktivierter Waschanlage den zwischen der wenigstens einen Düsenöffnung und dem Rückschlag- und Einlüftungsventil (11, 11a, 18) vorgesehenen Teil der Flüssigkeitsverbindung für ein Leerlaufen entlüftet, wobei das wenigstens eine Rückschlag- und Entlüftungsventil (11, 11a, 18) sowie ein dieses Ventil mit der Quelle (7) für die Reinigungs- und Waschflüssigkeit verbindender Abschnitt (10.1) der Flüssigkeitsverbindung (10) beheizt und/oder in einem beheizten oder beheizbaren Raum (12) des Fahrzeugs (2) untergebracht sind, wobei das Rückschlag- und Entlüftungsventil (19) in einem Ventilgehäuse (21) eine erste Ventilkammer (22) aufweist, die an den an die Quelle (7) für die Reinigungs- und Waschflüssigkeit führenden Abschnitt der Flüssigkeitsverbindung angeschlossen ist, wobei in dem Ventilgehäuse (21) eine zweite Ventilkammer (29) ausgebildet ist, die an einen an die wenigstens eine Spritzdüse oder Düsenöffnung führenden Abschnitt der Flüssigkeitsverbindung angeschlossen ist, und wobei in einer die beiden Ventilkammern (22, 29) trennenden Wand wenigstens eine Ventilöffnung (26) mit einem Ventilelement (27) vorgesehen ist, welches die Ventilöffnung (26) bei einem Druck in der ersten Ventilkammer (22) öffnet,
**dadurch gekennzeichnet, dass**
dass in einer Wand der zweiten Ventilkammer (29) wenigstens eine Entlüftungsöffnung (28) mit dem Ventilelement (27) vorgesehen ist, welches bei fehlendem Druck in der ersten Ventilkammer (22) die zweite Ventilkammer (29) über die wenigstens eine Entlüftungsöffnung (28) zur Umgebung öffnet,
dass für die wenigstens eine Ventilöffnung (26) und die wenigstens eine Entlüftungsöffnung (28) ein gemeinsames Ventilelement (27) vorgesehen ist, und dass das Ventilelement (27) elastisch verformbar ausgebildet ist.

2. Waschanlage nach Anspruch 1, **dadurch gekennzeichnet, dass** das wenigstens eine Rückschlag- und Entlüftungsventil (11, 11a, 18) und der wenigstens eine dieses Ventil mit der Quelle (7) für die Reinigungs- und Waschflüssigkeit verbindende Teilabschnitt (10.1) der Flüssigkeitsverbindung in einem Motorraum (12) des Fahrzeugs (2) untergebracht ist.

3. Waschanlage nach Anspruch 1 oder 2, **dadurch gekennzeichnet, dass** das wenigstens eine Rückschlag- und Entlüftungsventil (11, 11a, 18) und/oder der wenigstens eine dieses Ventil mit der Quelle (7) für die Reinigungs- und Waschflüssigkeit verbindende Abschnitt der Flüssigkeitsverbindung zumindest in Teilbereichen elektrisch beheizbar und/oder mit einem elektrischen Heizelement versehen sind.

4. Waschanlage nach einem der Ansprüche 1 bis 3, **dadurch gekennzeichnet, dass** bei mehreren jeweils wenigstens eine Spritzdüse oder Düsenöffnung aufweisenden Waschdüsen (6) und/oder bei mehreren mit jeweils wenigstens einer Spritzdüse versehenen Wischblättern (4) für sämtliche Waschdüsen (6) und/oder Wischblätter (4) ein gemeinsames Rückschlag- oder Entlüftungsventil (11) vorgesehen ist.

5. Waschanlage nach einem der Ansprüche 1 bis 3, **dadurch gekennzeichnet, dass** bei mehreren jeweils wenigstens eine Düsenöffnung aufweisenden Wäschdüsen (6) und/oder bei mehreren jeweils wenigstens eine Düsenöffnung aufweisenden Wischblättern (4) für jede Waschdüse (6) und/oder für jedes Wischblatt (4) ein eigenständiges Rückschlag- und Entlüftungsventil (11a) vorgesehen ist.

6. Waschanlage nach einem der Ansprüche 1 bis 5, **dadurch gekennzeichnet, dass** bei wenigstens einem zumindest eine Düsenöffnung aufweisenden und mittels eines Wischblattadapters (17) lösbar an einem Wischarm (3) befestigten Wischblatt (4) das Rückschlag- und Entlüftungsventil (11, 11a) in dem Wischblattadapter (17) ausgebildet ist.

7. Waschanlage nach einem der Ansprüche 1 bis 6, **dadurch gekennzeichnet, dass** das wenigstens eine Ventilelement (27) in einem Ringraum (29.1) der zweiten Ventilkammer (29) angeordnet ist, wobei der Ringraum (29.1) zwischen der Trennwand (21.1.2) und einem dieser Trennwand (21.1.2) gegenüberliegenden Begrenzungswand (21.2.1) gebildet ist, und dass der Abstand zwischen den Ringraum (29.1) begrenzenden Wandabschnitte so gewählt ist, dass das Ventilelement (27) bei verschlossener Ventilöffnung (26) die Entlüftungsöffnung (28) freigibt und bei geöffneter Ventilöffnung (26) die Entlüftungsöffnung (28) verschließt.

8. Waschanlage nach einem der Ansprüche 1 bis 7, **dadurch gekennzeichnet, dass** das Ventilgehäuse (21) wenigstens zwei Gehäuseelemente oder Gehäuseteile (21.1, 21.2) aufweist, von denen ein Gehäuseteil (21.1) die erste Ventilkammer (22) und das andere Gehäuseteil (21.2) die zweite Ventilkammer (29) bildet, vorzugsweise in einem das erste Gehäuseteil (21.1) umschließenden Teilbereich.

## Claims

1. Washing system for vehicle windows, in particular for vehicle windscreens (1), with at least one nozzle opening which, in order to apply the cleaning and washing liquid to the vehicle windows, connects via a liquid connection to a source (7) providing the cleaning and washing liquid under pressure, and with at least one check and bleed valve (11, 11a, 18) which is provided in the liquid connection and, when the washing system is activated, transfers the cleaning and washing liquid to the at least one nozzle opening, and, when the washing system is not activated, bleeds that part of the liquid connection which is provided between the at least one nozzle opening and the check and bleed valve (11, 11a, 18) for drainage purposes, wherein the at least one check and bleed valve (11, 11a, 18) and a section (10.1) of the liquid connection (10) that connects said valve to the source (7) for the cleaning and washing liquid are heated and/or are accommodated in a heated or heatable compartment (12) of the vehicle (2), wherein the check and bleed valve (19) has, in a valve housing (21), a first valve chamber (22) which is connected to that section of the liquid connection which leads to the source (7) for the cleaning and washing liquid, wherein a second valve chamber (29) is formed in the valve housing (21), said second valve chamber being connected to a section of the liquid connection that leads to the at least one spray nozzle or nozzle opening, and wherein at least one valve opening (26) is provided in a wall separating the two valve chambers (22, 29), with a valve element (27) which opens the valve opening (26) in the event of pressure in the first valve chamber (22), **characterized in that** at least one bleed opening (28) is provided in a wall of the second valve chamber (29), with the valve element (27) which, when there is a lack of pressure in the first valve chamber (22), opens the second valve chamber (29) to the surroundings via the at least one bleed opening (28), **in that** a common valve element (27) is provided for the at least one valve opening (26) and the at least one bleed opening (28), and **in that** the valve element (27) is formed in an elastically deformable manner.

2. Washing system according to Claim 1, **characterized in that** the at least one check and bleed valve (11, 11a, 18) and the at least one liquid-connection subsection (10.1) connecting said valve to the source (7) for the cleaning and washing liquid are accommodated in an engine compartment (12) of the vehicle (2).

3. Washing system according to Claim 1 or 2, **characterized in that** the at least one check and bleed valve (11, 11a, 18) and/or the at least one liquid-connection section connecting said valve to the source (7) for the cleaning and washing liquid are/is electrically heatable at least in partial regions and/or provided with an electric heating element.

4. Washing system according to one of Claims 1 to 3, **characterized in that**, in the event of a plurality of washing nozzles (6) each having at least one spray nozzle or nozzle opening and/or in the event of a plurality of wiper blades (4) each provided with at least one spray nozzle, a common check or bleed valve (11) is provided for all of the washing nozzles (6) and/or wiper blades (4).

5. Washing system according to one of Claims 1 to 3, **characterized in that**, in the event of a plurality of washing nozzles (6) each having at least one nozzle opening and/or in the event of a plurality of wiper blades (4) each having at least one nozzle opening, an independent check and bleed valve (11a) is provided for each washing nozzle (6) and/or for each wiper blade (4).

6. Washing system according to one of Claims 1 to 5, **characterized in that**, in the event of at least one wiper blade (4) which has at least one nozzle opening and is fastened releasably to a wiper arm (3) by means of a wiper blade adapter (17), the check and bleed valve (11, 11a) is formed in the wiper blade adapter (17).

7. Washing system according to one of Claims 1 to 6, **characterized in that** the at least one valve element (27) is arranged in an annular space (29.1) of the second valve chamber (29), wherein the annular space (29.1) is formed between the partition (21.1.2) and a boundary wall (21.2.1) lying opposite said partition (21.1.2), and **in that** the distance between wall sections bounding the annular space (29.1) is selected in such a manner that the valve element (27) opens up the bleed opening (28) when the valve opening (26) is closed and closes the bleed opening (28) when the valve opening (26) is open.

8. Washing system according to one of Claims 1 to 7, **characterized in that** the valve housing (21) has at least two housing elements or housing parts (21.1, 21.2), of which one housing part (21.1) forms the first valve chamber (22) and the other housing part (21.2) forms the second valve chamber (29), preferably in a partial region surrounding the first housing part (21.1).

## Revendications

1. Système de lavage de vitres de véhicules, notamment pour des pare-brises (1) de véhicule, avec au moins un orifice de buse qui pour distribuer du liquide de nettoyage et de lavage sur les vitres des véhicules relie par l'intermédiaire d'une liaison par liquide avec une source (7) mettant à disposition le liquide de nettoyage et de lavage sous pression, ainsi qu'avec au moins un clapet anti-retour et clapet d'aération (11, 11a, 18) prévu dans la liaison par liquide, lequel lorsque le système de lavage est activé, redistribue le liquide de nettoyage et de lavage vers l'au moins un orifice de buse, lorsque le système de lavage n'est pas activé, purge la partie de la liaison par liquide prévue entre l'au moins un orifice de buse et le clapet anti-retour et clapet d'aération (11, 11a, 18) pour un fonctionnement à vide, l'au moins un clapet anti-retour et clapet d'aération (11, 11a, 18), ainsi qu'un segment (10.1) de la liaison par liquide (10) reliant ledit clapet avec la source (7) pour le liquide de nettoyage et de lavage étant chauffés et/ou logés dans un espace (12) chauffé ou susceptible d'être chauffé du véhicule (2), dans un corps de clapet (21), le clapet anti-retour et clapet d'aération (19) comportant une première boîte à clapet (22) qui est raccordée sur la section de la liaison par liquide qui conduit vers la source (7) de liquide de nettoyage et de lavage, dans le corps de clapet (21) étant conçue une deuxième boîte à clapet (29) qui est raccordée sur un segment de la liaison par liquide qui conduit à l'au moins un gicleur ou orifice de buse, et dans une paroi séparant les deux boîtes à clapet (22, 29) étant prévu au moins un orifice de clapet (26) avec un élément de clapet (27) lequel ouvre l'orifice de clapet (26) en présence d'une pression dans la première boîte à clapet (22), **caractérisé en ce que**
dans une paroi de la deuxième boîte à clapet (29), il est prévu au moins un orifice de purge (28) avec l'élément de clapet (27), lequel en l'absence de pression dans la première boîte à clapet (22) ouvre sur l'environnement la deuxième boîte à clapet (29), via l'au moins un orifice de purge (28)
**en ce que** pour l'au moins un orifice de clapet (26) et l'au moins un orifice de purge (28), il est prévu un élément de clapet (27) commun et **en ce que** l'élément de clapet (27) est élastiquement déformable.

2. Système de lavage selon la revendication 1, **caractérisé en ce que** l'au moins un clapet anti-retour et clapet d'aération (11, 11a, 18) et l'au moins un segment partiel (10.1) de la liaison par liquide reliant ledit clapet avec la source (7) pour le liquide de nettoyage et de lavage sont logés dans un compartiment moteur (12) du véhicule (2).

3. Système de lavage selon la revendication 1 ou la revendication 2, **caractérisé en ce qu'**au moins dans des zones partielles, l'au moins un clapet anti-retour et clapet d'aération (11, 11a, 18) et/ou l'au moins un segment de la liaison par liquide reliant ledit clapet avec la source (7) pour le liquide de nettoyage et de lavage sont susceptibles d'être chauffés électriquement et/ou sont munis d'un élément chauffant électrique.

4. Système de lavage selon l'une quelconque des revendications 1 à 3, **caractérisé en ce qu'**en présence de plusieurs buses de lavage (6) comportant au moins un gicleur ou orifice de buse et/ou en présence de plusieurs raclettes d'essuie-glace (4) comportant chacune au moins un gicleur, il est prévu pour l'ensemble des buses de lavage (6) et/ou raclettes d'essuie-glace (4) un clapet anti-retour et clapet d'aération (11) commun.

5. Système de lavage selon l'une quelconque des revendications 1 à 3, **caractérisé en ce qu'**en présence de plusieurs buses de lavage (6) comportant au moins un orifice de buse et/ou en présence de plusieurs raclettes d'essuie-glace (4) comportant chacune un orifice de buse, il est prévu pour chaque buse de lavage (6) et/ou pour chaque raclette d'essuie-glace (4) un clapet anti-retour et clapet d'aération (11a) autonome.

6. Système de lavage selon l'une quelconque des revendications 1 à 5, **caractérisé en ce qu'**en présence d'au moins une raclette d'essuie-glace (4) comportant au moins un orifice de buse et fixée de manière amovible sur un bras d'essuie-glace (3) au moyen d'un adaptateur (17) de raclette d'essuie-glace, le clapet anti-retour et clapet d'aération (11, 11a) est conçu dans l'adaptateur (17) de raclette d'essuie-glace.

7. Système de lavage selon l'une quelconque des revendications 1 à 6, **caractérisé en ce que** l'au moins un élément de clapet (27) est placé dans un espace annulaire (29.1) de la deuxième boîte à clapet (29), l'espace annulaire (29.1) étant réalisé entre la paroi de séparation (21.1.2) et une paroi de délimitation (21.2.1) opposée à ladite paroi de séparation (21.1.2) et **en ce que** l'écart entre des parties de paroi délimitant l'espace annulaire (29.1) est choisi de sorte que lorsque l'orifice de clapet (26) est fermé, l'élément de clapet (27) libère l'orifice de purge (28) et lorsque l'orifice de clapet (26) est ouvert, ferme l'orifice de purge (28).

8. Système de lavage selon l'une quelconque des revendications 1 à 7, **caractérisé en ce que** le corps de clapet (21) comporte au moins deux éléments de corps ou parties de corps (21.1, 21.2) parmi lesquels une partie de corps (21.1) forme la première boîte à clapet (22) et l'autre partie de corps (21.2) forme la deuxième boîte à clapet (29), de préférence dans une zone partielle entourant la première partie de corps (21.1).
